Europäisches Patentamt

European Patent Office

Office européen des brevets

(19)

(11) Numéro de publication: **0 187 605 B1**

(12) **FASCICULE DE BREVET EUROPEEN**

(45) Date de publication du fascicule du brevet:
**07.12.88**

(51) Int. Cl.⁴: **G 21 C 7/10**, G 21 C 7/12, G 21 C 19/10

(21) Numéro de dépôt: **85402647.3**

(22) Date de dépôt: **27.12.85**

(54) Dispositif de déplacement d'une grappe de crayons de commande de réacteur nucléaire.

(30) Priorité: **27.12.84 FR 8419917**

(43) Date de publication de la demande:
**16.07.86 Bulletin 86/29**

(45) Mention de la délivrance du brevet:
**07.12.88 Bulletin 88/49**

(84) Etats contractants désignés:
**BE DE NL**

(56) Documents cités:
**EP-A- 0 111 435
FR-A- 2 106 373
US-A- 3 020 887
US-A- 3 698 756
US-A- 4 073 684**

(73) Titulaire: **FRAMATOME, Tour Fiat 1 place de la Coupole, F-92400 Courbevoie (FR)**

(72) Inventeur: **Denizou, Jean-Pierre, 15, Hameau des Amandines, F-69290 Craponne (FR)**

(74) Mandataire: **Fort, Jacques et al, CABINET PLASSERAUD 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne les dispositifs de commande d'une grappe de crayons de commande déplaçable verticalement dans le cœur d'un réacteur nucléaire, grappe appartenant à un ensemble de deux grappes déplaçables coaxialement et remplissant des fonctions différentes.

L'utilisation d'ensembles de ce type permet de mieux assurer les fonctions de pilotage, de réglage de puissance, de compensation de l'épuisement du combustible et d'arrêt d'un réacteur nucléaire. On a en particulier proposé des ensembles dans lesquels l'une des grappes est constituée de crayons dits «noirs» présentant une très forte absorption neutronique et l'autre grappe est constituée d'éléments «gris». La grappe de crayons «noirs» est insérée dans le cœur du réacteur pour amener et maintenir ce dernier à l'arrêt, en la descendant en position basse. Le dispositif peut être partiellement commun aux deux grappes (FR-A-2 106 373). On a également proposé d'associer un dispositif distinct à chaque grappe (FR-A-2 537 764). Mais aucune des dispositions antérieures n'autorise une pleine liberté de déplacement de l'une des grappes, alors que l'autre grappe est dans l'une ou l'autre de ses positions extrêmes, sauf au prix de mécanismes complexes.

L'invention vise à fournir un dispositif de déplacement vertical d'une grappe de crayons de commande dans le cœur d'un réacteur nucléaire permettant tout à la fois d'amener et de maintenir cette grappe dans l'une ou l'autre de ses deux positions terminales, de laisser une pleine liberté de réglage d'une autre grappe quelle que soit la position terminale prise par la première grappe et ce en ne mettant en œuvre que des moyens simples.

Dans ce but, l'invention propose un dispositif de déplacement qui comprend un arbre vertical déplaçable suivant son axe et portant des moyens de préhension destinés à coopérer avec au moins un grappin solidaire de la grappe à déplacer, par appui du grappin sur les moyens de préhension ou par accrochage élastique de doigts du grappin sur les moyens de préhension. Les doigts sont prévus pour que les moyens de préhension s'accrochent sur eux et les dégagent d'une structure supérieure lorsque ces moyens sont levés au-delà de la position qui provoque l'accrochage du grappin sur la structure fixe supérieure. Une structure fixe inférieure est prévue pour provoquer un décrochage forcé des moyens de préhension lorsque ces derniers sont abaissés au-delà de la position de repos du grappin sur la structure fixe inférieure, une remontée des moyens de préhension entraînant alors le grappin par simple appui.

Les moyens de préhension peuvent se limiter à une pince rigide comportant des lames de verrouillage sur les doigt et un fond percé de passages pour des pions solidaires de la structure fixe inférieure et venant chasser le grappin. Le dispositif ainsi constitué permet d'accrocher la grappe en position haute à la structure supérieure et de l'y abandonner; il permet aussi de déposer la grappe en position basse, en laissant une complète liberté de mouvement à l'autre grappe. Les mouvements de la première grappe sont rendus indépendants de ceux de l'autre grappe, qui sera généralement constituée de crayons de réglage.

L'invention sera mieux comprise à la lecture de la description qui suit d'un mode particulier d'exécution donné à titre d'exemple non limitatif. La description se réfère aux dessins qui l'accompagnent, dans lesquels:

— la Figure 1 est un schéma de principe, en élévation, montrant les composants principaux du dispositif suivant l'invention, placés en différentes positions dans les structures internes supérieures du cœur d'un réacteur, le grappin étant représenté en traits pleins alors qu'il est supporté par une pince de déplacement, en traits mixtes alors qu'il est accroché à une structure supérieure fixe;

— la Figure 2 est une vue de dessus montrant la potence du dispositif avec quatre pinces de sous-grappe qu'elle porte;

— la Figure 3 est une vue de détail à grande échelle, en coupe suivant un plan vertical, montrant l'un des grappins du dispositif accroché à la structure fixe supérieure (position montrée en traits mixtes sur la Figure 1);

— la Figure 4, similaire à la Figure 3, montre l'un des grappins en cours de déverrouillage et de dégagement de la structure supérieure;

— la Figure 5 est une vue de détail montrant la pince d'une sous-grappe accrochée au grappin, au cours de sa descente;

— la Figure 6, similaire aux Figures 3 et 4, montre le décrochage de la pince lorsque cette dernière arrive en fin de course basse, le grappin étant en appui sur la structure fixe inférieure;

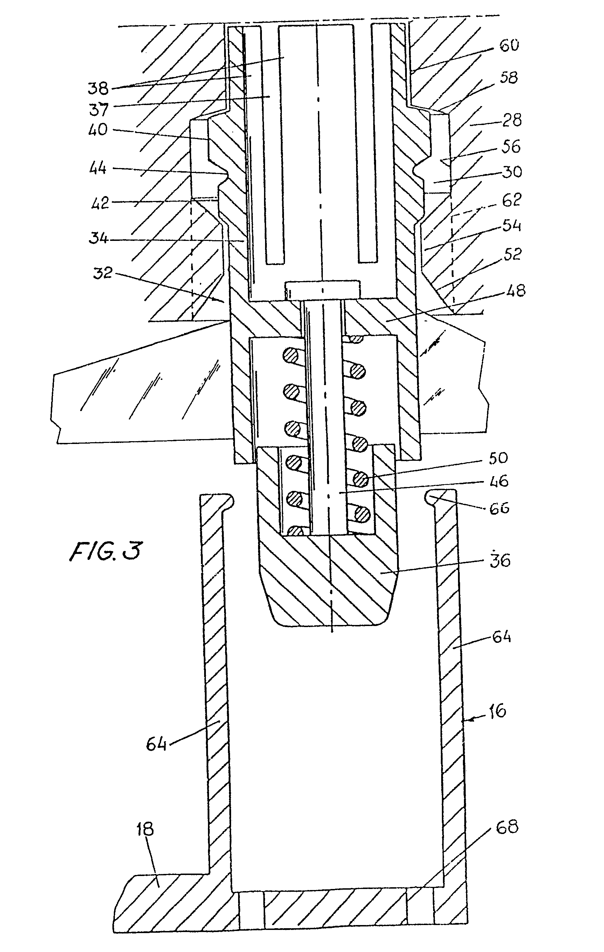

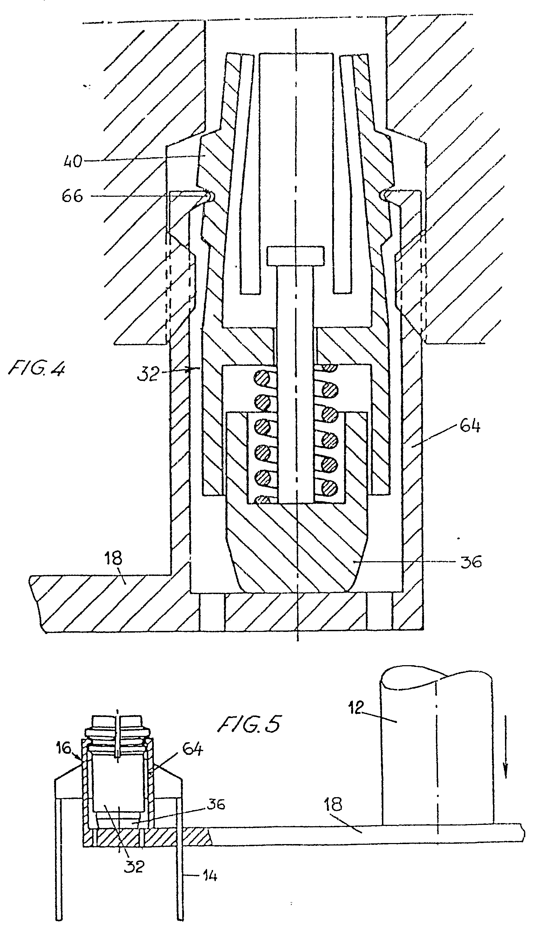

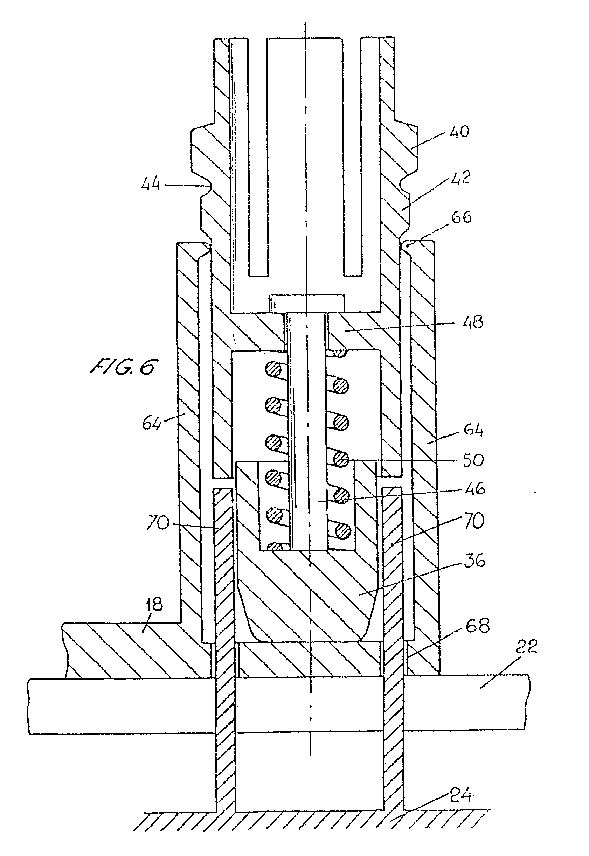

— les Figures 7 et 8 sont des schémas montrant, respectivement en élévation et en vue de dessus, une variante des doigts de déverrouillage du grappin.

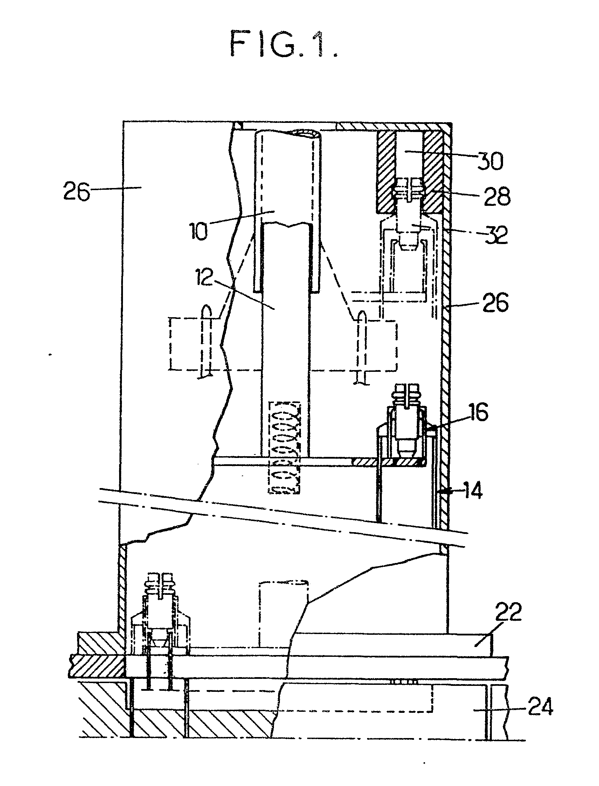

Le dispositif de déplacement d'une grappe montré en Figures 1 et 2 appartient au mécanisme de commande d'un ensemble de deux grappes de crayons de réglage déplaçables verticalement pour les engager plus ou moins profondément dans un même assemblage de combustible. On appellera par la suite «grappe inférieure» celle de ces grappes qui est commandée par le dispositif et on appellera «grappe supérieure» l'autre. Toutefois, dans certaines conditions de fonctionnement, la grappe dite supérieure peut se trouver au-dessous de l'autre.

La grappe supérieure n'est pas représentée. On peut supposer qu'elle est constituée en crayons contenant un poison neutronique et qu'elle est utilisée pour le réglage de la puissance du réacteur. Cette grappe supérieure est portée par un arbre de commande 10, tubulaire, guidé dans un tube (non représenté) de traversée du couvercle de cuve de réacteur. L'arbre 10 est commandé par des moyens moteurs qui peuvent avoir des constitutions très diverses. Ces moyens moteurs peuvent par exemple être l'un de ceux décrits dans les documents FR-A-2 537 764, 2 232 820, 2 106 373 auxquels on pourra se reporter.

La grappe inférieure est solidarisable et désoli- darisable d'un arbre de commande 12, coaxial à l'arbre 10. La grappe représentée est constituée de quatre sous-grappes 14 (ce nombre n'étant pas limitatif) de chacune seize crayons (Figure 2). Chacune de ces sous-grappes 14 coopère avec des moyens de préhension constitués par une pince 16 solidaire d'un bras de potence 18 fixé à l'arbre 12 (Figures 1 et 2). La nature des crayons constituant les sous-grappes changera suivant l'application envisagée. Ces crayons peuvent contenir une teneur élevée de matériau absorbant les neutrons, lorsque la grappe inférieure est prévue pour amener le réacteur à l'arrêt. Ces crayons peuvent également comporter un matériau modérateur, lorsque l'on souhaite par exemple modifier le taux de modération du réacteur au cours de la vie de ce dernier. Ils peuvent encore contenir un matériau fertile. L'arbre de commande 12 porte à sa partie inférieure un amortisseur de chute 20 à ressort, destiné à venir en contact avec la plaque supérieure de cœur 22 lors de la descente rapide de l'arbre 12 soutenant les grappes et des ralentir la course terminale.

Chaque ensemble de deux grappes associé à un assemblage de combustible, tel que celui dont l'embout supérieur 24 apparaît sur la Figure 1, est muni de moyens de guidage et de retenus fixe appartenant aux organes internes du réacteur. Ces moyens comprennent un tube guide 26 fixé à la plaque supérieure de cœur et muni d'une structure supérieure 28 dans laquelle sont pratiqués des logements 30 de réception de grappins 32. La plaque supérieure de cœur constitue, dans le mode de réalisation décrit, une structure inférieure supportant la potence 18 et les sous-grappes 14 lorsqu'elles sont en position basse.

Le dispositif suivant l'invention comprend un grappin 32 par sous-grappe 14. La constitution de ce grappin apparaît mieux sur les Figures 3 à 6. Les crayons de la sous-grappe sont suspendus à des bras radiaux du corps tubulaire 34 du grappin. La partie haute de ce corps tubulaire 34 est fractionnée, par des fentes 37, parallèles à l'axe et réparties à intervalles réguliers, en doigts flexibles 38. Chaque doigt flexible présente deux saillies 40 et 42 séparées par une gorge intermédiaire 44. Dans la partie inférieure du corps 34 peut coulisser une butée 36 munie d'un pion 46 limitant les déplacements de la butée vers le bas à partir d'une cloison transversale 48 du corps. Un ressort de rappel 50 tend à repousser la butée 46 vers la position basse dans laquelle elle est montrée en Figures 1 et 3. Le ressort 50 est maintenu ainsi en précontrainte. Cette précontrainte est tarée de façon que le ressort ne se comprime et n'autorise l'enfoncement de la butée 36 que lorsqu'il est soumis à une force supérieure au poids de la sous-grappe et à l'effort d'encliquetage de la sous-grappe 32 dans le logement 30.

Le logement 30 de réception de chaque grappin dans la structure supérieure 28 présente une forme de révolution. Il comprend, du bas vers le haut, un chanfrein d'entrée 52, un bourrelet interne 54, un chambrage 56 et un épaulement 58 de raccordement avec une partie 60 de diamètre plus faible que celui du bourrelet 54. Des saignées 62, au nombre de quatre dans le mode de réalisation illustré, fractionnent le bourrelet 54 à intervalles angulaires réguliers. Leur profondeur est telle que leur fond soit de niveau avec celui du chambrage 56 et leur rôle apparaîtra plus loin. La dimension axiale du chambrage 56 est telle qu'il puisse recevoir l'ensemble des deux saillies 40 et 42, comme le montre la Figure 3.

Chacune des pinces 16 portées par un bras de potence 18 comprend quatre lames rigides dont les dimensions et la répartition sont telles qu'elles puissent venir s'insérer dans les saignées 62 du logement 30 lors du mouvement de levée de la pince. Chacune des lames 64 est terminée par une lèvre d'accrochage 66, prévue pour passer entre les bras du grappin 32 et pour:

— prendre appui sur la saillie 42, pour supporter le grappin 32,

— s'insérer dans la gorge intermédiaire 44 du grappin afin d'accrocher la pince 16 au grappin 32, lorsque la pince est levée alors que le grappin est en butée haute.

Le fond de la pince 16 est percé de plusieurs trous 68 répartis autour de l'axe vertical de la pince, face au corps tubulaire 34 du grappin. Les trous 68 sont destinés à livrer passage à des doigts 70 de décrochage forcé de la pince. Dans le mode d'exécution montré en Figure 1, les doigts 70 sont portés par l'embout 24 de l'assemblage qui constitue la structure fixe inférieure pour le dispositif. Les doigts 70 ont une longueur suffisante pour retenir le corps 34 lorsque ce dernier est tiré vers le bas par la pince 16 accrochée aux doigts 38.

Le fonctionnement du dispositif au cours des diverses phases possibles est le suivant.

*Verrouillage du grappin en position haute:*

La première opération consiste à placer la grappe supérieure en surcourse haute.

Le verrouillage du grappin en position haute s'effectue automatiquement par encliquetage en levant la pince 16 sur laquelle le grappin repose par appui simple (Figure 1). Les saillies 40 des doigts 38 entrent en contact avec le chanfrein d'entrée 52. Si le soulèvement de la pince 16 se poursuit, la force transmise de la pince au grappin par l'intermédiaire de la butée 36 et du ressort 50 est suffisante pour fléchir les doigts 38 vers l'intérieur, la saillie 40 glissant sur le chanfrein. Dès que les saillies 40 et 42 arrivent en face du chambrage 56, les doigts reviennent à leur position primitive et les saillies s'encliquètent et verrouillent le grappin. Le déplacement vers le haut de la pince 16 doit alors être arrêté.

La potence 18 peut alors être descendue (Figure 3) jusqu'à sa position basse, libérant ainsi complètement le trajet de la grappe de crayons de réglage. Les grappins 32 et les sous-grappes 14 restent en position haute.

*Déverrouillage et descente:*

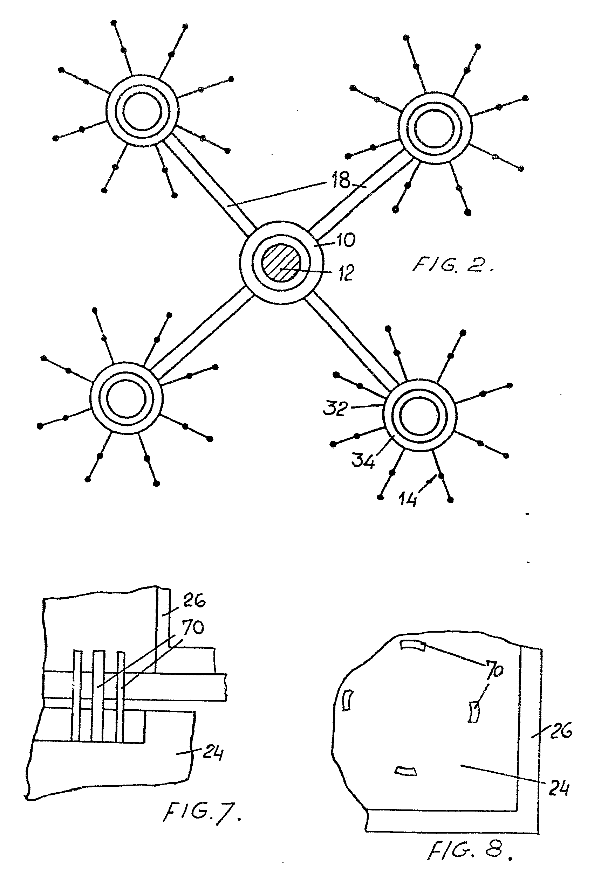

Pour amener la grappe en position basse, la potence 18 est levée. Les lèvres 66 viennent en appui contre la saillie 42 et le fond de la pince 16 vient en appui contre la butée 36. En soulevant davantage encore la pince 16, il y a compression du ressort 50 et simultanément refoulement vers l'intérieur des doigts 38 par les lames rigides 64 guidés par les logements 56 et 62. Les lèvres 66 viennent se loger dans la gorge 44 dont la profondeur est telle que les saillies 40, toujours en appui contre l'épaulement 58, ont un encombrement inférieur à la section de passage laissée libre par le bourrelet 54 (Figure 4). En descendant l'arbre 12 et la potence 18, on entraîne alors les grappins 32 accrochés aux pinces 16 et les sous-grappes 14 (Figure 5).

La potence peut ainsi être descendue jusqu'à une position basse définie par l'appui du corps tubulaire 34 du grappin 32 sur les pions 70.

*Décrochage et relevage:*

Lorsqu'on veut ramener les sous-grappes 14 en position haute, on commence par décrocher les grappins 32 des pinces 16. Ce décrochage est effectué en donnant à l'arbre 12 un déplacement supplémentaire vers le bas. Le corps 34 du grappin 32 est alors retenu par les pions fixes 70 et les lèvres 66 s'échappent vers le bas, en fléchissant temporairement les doigts élastiques 38. Dès que les lèvres se sont échappées de la gorge 44, le ressort 50 relève le grappin qui vient dans la position montrée en Figure 6, en appui simple sur les lèvres 66 et, par la butée 36, sur le fond de la pince.

La butée 36, destinée à prendre appui sur le fond de la pince 16, remplit deux fonctions:

— Lorsque le grappin est accroché à la pince (Figure 5), la butée maintient le grappin dans une position bien déterminée par rapport à la pince, car le ressort présente alors une force de compression inférieure à l'effort de verrouillage élastique. La butée rattrape les jeux éventuels et évite les chocs et ainsi les effets de fatigue.

— La butée élastique soulage de plus les pions 70 lors du passage de l'accrochage à l'appui simple. En effet, le ressort 50, dont la précompression est supérieure au poids de la sous-grappe, assiste les pions 70 dans leur action.

On voit que le dispositif permet, d'une part, d'accrocher les sous-grappes en position haute et de les abandonner, d'autre part, de les amener en position basse, donc de soustraire complètement ces sous-grappes au déplacement de la grappe de crayons de commande. Il est important de noter que l'ensemble des opérations d'accrochage et de décrochage, de verrouillage et de déverrouillage, est commandé uniquement par des déplacements de la pince, sans aucun organe annexe. Les mécanismes peuvent donc être très simples. On connaît déjà des mécanismes de commande existants assurant une précision de positionnement largement suffisante pour effectuer en aveugle les diverses opérations requises.

**Revendications**

1. Dispositif de déplacement d'une grappe de crayons de commande déplaçable dans le cœur d'un réacteur nucléaire entre une position haute d'accrochage sur une structure fixe supérieure (28) et une position basse d'appui sur une structure fixe (22) inférieure, comprenant un arbre vertical (12) déplaçable suivant son axe et portant des moyens de préhension (16) destinés à coopérer avec au moins un grappin (32) solidaire de la grappe (14) à déplacer, caractérisé en ce que le grappin (32) comporte des doigts élastiques (38) destinés à s'accrocher sur les moyens de préhension (16) et à se verrouiller par encliquetage sur la structure fixe supérieure (28), les moyens de préhension (16) étant constitués de façon à s'accrocher aux doigts élastiques déverrouillés de la structure supérieure lorsque ces moyens sont levés au-delà de la position qui provoque le verrouillage du grappin sur la structure fixe supérieure, tandis que la structure fixe (22) inférieure est prévue pour provoquer un décrochage forcé des moyens de préhension lorsque ces derniers sont abaissés au-delà de la position de repos du grappin sur ladite structure fixe inférieure, une remontée des moyens de préhension entraînant alors le grappin (32) par simple appui.

2. Dispositif suivant la revendication 1, caractérisé en ce que les moyens de préhension comportent une pince rigide (16) comportant des lames (64) d'accrochage sur les doigts élastiques (38) et un fond percé de passages (68) pour des pions (70) solidaires de l'embout supérieur (24) d'un assemblage combustible associé à ladite grappe et destinés à chasser le grappin.

3. Dispositif suivant la revendication 2, caractérisé en ce que le grappin (32) comprend un corps tubulaire (34) fractionné pour constituer les doigts élastiques (38) et présentant une partie basse coopérant avec les pions (70) et une butée élastique (36, 50) destinée à prendre appui sur la pince (16) et ayant une force de précontrainte supérieure au poids du grappin et à la force d'encliquetage de celui-ci et de la grappe et en ce que la structure fixe supérieure (28) comporte un logement de grappin (30) ayant un chambrage annulaire (56) délimité par un épaulement (58), tourné vers le bas, d'appui des doigts élastiques (38) et par un bourrelet (54) de verrouillage de saillies (40, 42) des doigts.

4. Dispositif suivant la revendication 3, caractérisé en ce que des saignées (62) sont pratiquées dans le bourrelet (54) pour livrer passage aux lames rigides (64) et en ce que lesdites lames comportent des lèvres terminales (66) destinées à provoquer la flexion des doigts lors du levage de la pince alors que le grappin est en appui, jusqu'à accrochage des lèvres (66) dans une gorge (44) des doigts, la flexion étant suffisante pour dégager les doigts du chambrage et du bourrelet (54).

5. Dispositif suivant l'une quelconque des revendications précédentes, caractérisé en ce que ladite grappe est constituée de plusieurs sous-grappes (14) indépendantes, réparties autour de l'arbre vertical (12), associées chacune à un grappin (32) porté par une potence (18) fixée à l'arbre.

6. Dispositif suivant l'une quelconque des revendications 2 à 4, modifié en ce que les pions (70) sont portés par la plaque supérieure (22) de cœur du réacteur.

7. Dispositif suivant l'une quelconque des revendications précédentes, caractérisé en ce que chaque grappe ou sous-grappe est constituée de crayons contenant un absorbant neutronique, contenant un matériau destiné à changer le taux de modération du réacteur, ou contenant un matériau fertile.

8. Dispositif suivant la revendication 7, caractérisé en ce que l'arbre vertical (12) est disposé coaxialement à un second arbre (10) relié à une grappe de crayons de réglage de réactivité du réacteur.

**Patentansprüche**

1. Vorrichtung zum Versetzen eines Steuerstabbündels, das im Kern eines Kernreaktors zwischen einer oberen Rastposition auf einer oberen festen Struktur (28) und einer unteren Auflageposition auf einer unteren festen Struktur (22) verschiebbar ist, mit einer längs einer Achse verschiebbaren vertikalen Welle (12), die Greifelemente (16) trägt, die dazu bestimmt sind mit mindestens einem Greifelement zusammenzuwirken, das mit dem zu versetzenden Bündel (14) fest verbunden ist, dadurch gekennzeichnet, dass das Greifelement (32) elastische Finger (38) aufweist, die dazu bestimmt sind auf den Greiforganen (16) zu klemmen und sich dort durch Einrasten auf der oberen festen Struktur (28) zu verriegeln, wobei die Greiforgane (16) derart ausgebildet sind, dass sie sich auf die elastischen entriegelten Finger der oberen Struktur klemmen, während diese Organe oberhalb der Position angehoben sind, die das Verriegeln des Greifelements auf der festen oberen Struktur hervorruft, während die feste untere Struktur (22) vorgesehen ist, um ein erzwungenes Entriegeln der Greiforgane zu bewirken, wenn letztere bis unterhalb der Ruheposition des Greifelements auf der festen unteren Struktur herabgelassen sind, wobei ein Wiederhochfahren der Greiforgane das Greifelement (32) durch einfache Auflage mitnimmt.

2. Vorrichtung nach Anspruch 1, dadurch gekennzeichnet, dass die Greiforgane eine steife Zange (16) aufweisen mit Blättern (64) zum Eingreifen auf den elastischen Fingern (38) und einen durchbohrten Boden mit Durchgängen (68) für Stifte (70) die fest mit dem oberen Ende (24) einer Brennelementkassette verbunden sind, die mit dem Bündel verbunden ist und die dazu bestimmt sind, das Greifelement zu verdrängen.

3. Vorrichtung nach Anspruch 2, dadurch gekennzeichnet, dass das Greifelement (32) einen rohrförmigen geschlitzten Körper (34) aufweist, der die elastischen Finger (38) bildet und das einen unteren Bereich darstellt, der mit den Stiften (70) und einem elastischen Anschlag (36, 50) zusammenwirkt, der dazu bestimmt ist auf der Zange (16) aufzuliegen und der eine Vorspannung hat, die grösser ist als die Gewichtskraft des Greifelements und als die Einrastkraft des Greifelements und des Bündels und dadurch, dass die obere feste Struktur (28) ein Lager (30) für das Greifelement aufweist, mit einer Ringkammer (56), die durch eine Wulst (54) zur Verriegelung der vorstehenden Bereiche (40, 42) der Finger, begrenzt ist.

4. Vorrichtung nach Anspruch 3, dadurch gekennzeichnet, dass Einschnitte (62) in die Wulst (54) eingearbeitet sind um die steifen Blätter (64) durchzulassen und dadurch, dass die Blätter Endlippen (66) aufweisen, die dazu bestimmt sind eine Verbiegung der Finger während des Anhebens der Zange zu bewirken während das Greifelement in Anlage ist, bis die Lippen (66) in eine Nut (44) der Finger einrasten, wobei die Verbiegung ausreicht um die Finger aus der Ringkammer und der Wulst (54) zu befreien.

5. Vorrichtung nach einem der vorstehenden Ansprüche, dadurch gekennzeichnet, dass das Greiforgan aus mehreren voneinander unabhängigen Unter-Greiforganen (14) besteht, die um die vertikale Welle (12) herum verteilt und jeweils einem Greifelement (32) zugeordnet sind, das von einem Ausleger (18) getragen wird, der an der Welle befestigt ist.

6. Vorrichtung nach einem der Ansprüche 2 bis 4, dadurch abgewandelt, dass die Stifte (70) durch die obere Platte (22) des Reaktorkerns getragen werden.

7. Vorrichtung nach einem der vorstehenden Ansprüche, dadurch gekennzeichnet, dass jedes Bündel bzw. Unterbündel aus Stäben besteht, die ein Neutronenabsorber sowie ein Material, das dazu bestimmt ist den Moderationsgrad des Reaktors zu ändern oder die ein brütbares Material aufweisen.

8. Vorrichtung nach Anspruch 7, dadurch gekennzeichnet, dass die vertikale Welle (12) koaxial zu einer zweiten Welle (10) angeordnet ist, die mit einem Bündel von Stäben zur Steuerung der Reaktoraktivität verbunden ist.

**Claims**

1. Device for moving a cluster of control rods movable in the core of a nuclear reactor between an upper position for locking in an upper stationary structure (28) and a lower position of abutment onto a lower stationary structure (22), comprising an axially movable vertical shaft (12) carrying gripping means (16) for cooperation with at least one grab (32) fast with the cluster (14) to be moved, characterized in that the grab (32) has resilient fingers (38) arranged to engage the gripping means (16) and to latch by snap action onto the upper stationary structure (28), the gripping means (16) being so constructed as to engage the resilient fingers unlocked from the upper structure when said means are lifted above the position which results into locking of the grab on the upper stationary structure, while the lower stationary structure (22) is arranged for forcing the gripping means out of engagement when the latter are moved down beyond the position for which the grab abuts said lower stationary structure, the gripping means if lifted then driving the grab (32) due to one-way abutment connection.

2. Device according to claim 1, characterized in that the gripping means comprise a rigid nipper (16) having blades (64) for connection with said resilient fingers (38) and a bottom wall formed with passages (68) for pins (70) fast with the upper end nozzle (24) of a fuel assembly associated with said cluster and arranged to force out the grab.

3. Device according to claim 2, characterized in that the grab (32) comprises a tubular body (34) split up so as to form the resilient fingers (38) and having a lower part cooperating with the pins (70) and a resilient stop (36, 50) intended to bear on the nipper (16) and having a pre-stressing force greater than the weight of the grab and greater than the snap engagement force of the latter and of the cluster, and in that the upper stationary structure (28) comprises a grab housing (30) having an annular recess (56) defined by a downwardly facing shoulder (58) for abutment of the resilient fingers (38) and by a flange (54) for locking projections (40, 42) of the fingers.

4. Device according to claim 3, characterized in that grooves (62) are formed in the flange (54) for allowing passage of the rigid blades (64) and in that said blades comprise endmost lips (66) intended to cause bendling of the fingers during upward movement of the nipper when the grab is resting thereon, until the lips (66) are engaged in a groove (44) of the fingers, the amount of bending being sufficient for freeing the fingers from the recess and from the flange (54).

5. Device according to any one of the preceding claims, characterized in that said cluster is formed of a plurality of independent sub-clusters (14), distributed about the vertical shaft (12) and each associated with a grab (32) supported by a crosspiece (18) fixed to the shaft.

6. Device according to any one of claims 2–4, modified in that the pins (70) are carried by the upper core plate (32) of the reactor.

7. Device according to any one of the preceding claims, characterized in that each cluster or sub-cluster consists of rods containing either a neutron absorbant, or a material for changing the moderation ratio of the reactor, or fertile material.

8. Device according to claim 7, characterized in that the vertical shaft (12) is located coaxially to a second shaft (10) connected to a cluster of rods for controlling the reactivity of the reactor.

# FIG.1.

EP 0 187 605 B1

2/5

FIG. 2.

18

10

12

32

34

14

FIG.7.

26

70

24

FIG. 8.

70

26

24

9

FIG. 3

4/5

FIG. 4

FIG. 5

5/5

FIG. 6